(19) Europäisches Patentamt

European Patent Office

Office européen des brevets

(11) **EP 1 367 788 B1**

(12) **EUROPEAN PATENT SPECIFICATION**

(45) Date of publication and mention
of the grant of the patent:
**14.12.2005 Bulletin 2005/50**

(51) Int Cl.⁷: **H04L 25/03**

(21) Application number: **03011461.5**

(22) Date of filing: **20.05.2003**

(54) **Channel equaliser of OFDM receiver capable of adaptively equalizing OFDM signal according to state of channel**

Kanalentzerrer in einem OFDM-Empfänger zu dem Kanalzustand entsprechenden adaptiven Entzerrung eines OFDM-Signals

Egaliseur de canal d'un récepteur MDFO pour une égalisation adaptive correspondant à l'état du canal

(84) Designated Contracting States:
**DE FR GB**

(30) Priority: **31.05.2002 KR 2002030692**

(43) Date of publication of application:
**03.12.2003 Bulletin 2003/49**

(73) Proprietor: **SAMSUNG ELECTRONICS CO., LTD.**
**Suwon-City, Kyungki-do (KR)**

(72) Inventor: **Kwon, Yong-Sik**
**Seongdong-gu, Seoul (KR)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 1 067 709**     **US-A- 6 167 081**
**US-A1- 2003 058 974**

## Description

The present invention relates generally to a channel equalizer of an OFDM receiver, and more particularly to a channel equalizer of an OFDM receiver and method of equalizing OFDM signal using the same, which equalizes an OFDM signal by selecting an open loop equalizing and a closed loop equalizing according to a state of channel of the received OFDM signal.

Generally, a broadcasting system of High Definition Television: HDTV) can be largely divided into an image coding unit and a modulating unit. The image coding unit compresses digital data of about 1 Gbps outputted from an image source of a high image quality into data of 15-18Mbps. The modulating unit transmits digital data of tens of Mbps to a receiving part through a limited band channel of 6-8 MHz. The broadcast of the High Definition Television employs a ground simulcasting method which uses channels of VHF(Very High Frequency)/UHF(Ultra High Frequency) band for an existing television broadcast.

In Europe, an Orthogonal Frequency Division Multiplexing method (OFDM), which is a digital modulating method capable of obtaining a dual effect of an interference prevention and an improvement of transmission rate per bandwidth, is employed as the ground broadcasting method for the HDTV.

The OFDM method is to convert a series of inputted symbols into a parallel data of a specific block unit, and to multiplex the parallel symbols into different subcarrier frequencies.

The OFDM method uses a multiplex carrier, and has a considerable difference from an existing method using a single carrier.

The multiplex carrier has an orthogonal property between each other.

The orthogonal property means that a product of two carriers is '0', and this condition is a necessary condition for using the multiplex carrier.

The OFDM method is performed by a Fast Fourier Transform (FFT) and a Inverse Fast Fourier Transform (IFFT), and it is easily obtained by a definition of the Fast Fourier Transform and the orthogonal property between the carriers.

Meanwhile, advantages of the OFDM method are as follows.

Television Ground Transmission method has a channel characteristic that a channel interference between same/adjacent channels and a reflected wave that occurs at the signal transmission affect a transmission quality, and so a design condition of the transmission system is very complex.

However, the OFDM has a strong characteristic for a multipath.

That is, the OFDM signal uses different carriers to increase a symbol transmission time.

It is comparatively insensible to the interference signal by the multi-path to have little decrease of its performance even for an echo signal of long time.

Additionally, this method also has a strong characteristic for the existing signals to have little influence on the interference between same channels.

This characteristic allows the method to form a Single Frequency Network SFN.

Here, the Single Frequency Network means that a broadcast is transmitted at one frequency over the country. Thus, the interference between same channels is very serious, and the OFDM method can be used due to its strong property for this condition.

In this way, when the Single Frequency Network is used, a limited frequency resource can be effectively used.

Meanwhile, the OFDM signal is formed of multi carriers, and each carrier has a very small band.

So, a whole spectrum is almost rectangular, and so the multi carrier has a better frequency efficiency than the single carrier.

Additionally, the OFDM method is advantageous in that a waveform of the OFDM signal is same as the white Gaussian Noise and so the OFDM signal has little interference in comparison with other carrying service such as PAL (Phase Alternation by Line) and SECAM (Sequential Couleur a Memoire) method.

Accordingly, the OFDM method can change a modulating way for each carrier, to make possible the hierarchical transmission.

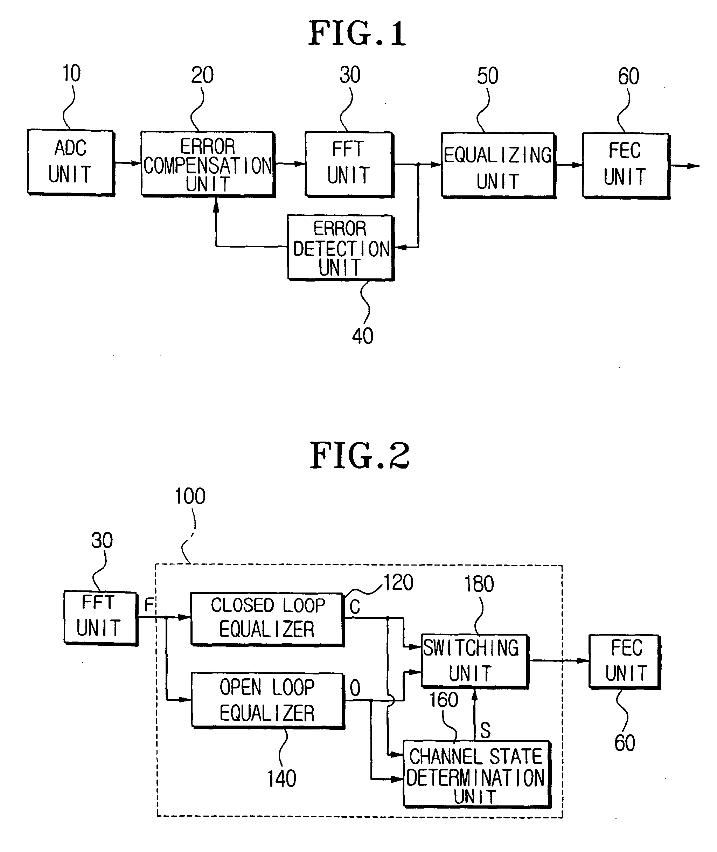

Fig. 1 is a block diagram of illustratively showing a general OFDM receiver.

The OFDM receiver comprises an ADC (Analog to Digital Converting) unit 10, a FFT (Fast Fourier Transforming) unit 30, an error detection unit 40, an error compensation unit 20, an equalizing unit 50, and a FEC (forward error correcting) unit 60.

The ADC unit 10 performs a sampling of OFDM signals inputted thereto, and converts the signals into digital signals by a quantizing process and a coding process.

The error compensation unit 20 compensates a sampling timing for distortion resulting from the sampling process of the ADC unit 10, that is a sampling offset of the OFDM signals.

Additionally, the error compensation unit 20 controls a window timing that is a window start point for performing a Fast Fourier Transforming of the OFDM signal.

The FFT unit 30 performs a Fast Fourier Transforming of the OFDM signal of which a sampling timing and a window timing is compensated by the error compensation unit 20.

The error detection unit 40 detects a symbol timing offset of the OFDM signal which has been Fast Fourier transformed, and transmits the detected symbol timing offset to the error compensation unit 20.

Then, the error compensation unit 20 compensates a sampling timing and a window timing of the OFDM signal according to the symbol timing offset provided by the error detection unit 40.

The equalizing unit 50 uses a reference signal such as a pilot that is set up between the OFDM transmitter/receiver, and estimates a transmission channel characteristic of the OFDM signal, and thereby compensates a distortion that has been generated on the transmission channel of the OFDM signal. The FEC unit 60 detects errors of the OFDM signal according to an error detection method, and corrects the detected errors.

Generally, as an equalizing unit 50 of the OFDM receiver, a closed loop equalizer or an open loop equalizer is used.

The closed loop equalizer equalizes the OFDM signal outputted from the FFT unit 30 by using a calculated value through an interpolating of the OFDM signal, which is already equalized.

The open loop equalizer equalizes the OFDM signal outputted from the FFT unit 30 with a value that is interpolated by using the pilot contained in the OFDM signal, and so the open loop equalizer is suitable in case the channel state is varied according to time.

However, in a related OFDM receiver, the closed loop equalizer or the open loop equalizer is selectively used as the equalizing unit 50.

In case the closed loop equalizer is used as an equalizer 50, an effect of the Gaussian noise contained in the OFDM signal at a static channel can be eliminated. Thus, this closed loop equalizer has an excellent performance in comparison with the open loop equalizer.

However, the closed loop equalizer is disadvantageous, in comparison with the open loop equalizer, in that an effect according to a variable channel state in a dynamic channel cannot be easily dealt with.

Additionally, the open loop equalizer is advantageous, in comparison with the closed loop equalizer, in that the open loop equalizer equalizes the OFDM signal according to the channel state at the dynamic channel.

The open loop equalizer assumes the channel state, and equalizes the OFDM signal according to information of the channel state, and so at a static channel this equalizer has a problem that it needs more time for an operation convergence in comparison with the closed loop equalizer.

EP-A-1067709 suggests an adaptive equalizer including a channel memory length estimator for estimating a channel memory length of a received signal, an adaptive equalizer for reducing effect of intersymbol interference on the received signal using a technique suitable for a channel with fast time-varying characteristic, an adaptive equalizer for reducing effect of intersymbol interference on the received signal using a technique suitable for a channel with a large delay spread, and a selector for switching between the two adaptive equalizers in response to the estimated channel memory length.

US-A-6167081 suggests a receiver having a non-equalizing demodulator, an equalizing demodulator, and an output control selector that selects the output of one of the two demodulators based on a bit error rate of a received baseband signal.

Accordingly, the present invention has been made keeping in mind the above problems occurring in the prior art.

It is the object of the present invention to provide an improved adaptive channel equalizer of an OFDM receiver and method therefore.

This object is solved by the subject matter of the independent claims. Preferred embodiments of the invention are defined by the dependent claims.

The above object, features and other advantages of the present invention will be more clearly understood from the following detailed description taken in conjunction with the accompanying drawings, in which:

Fig. 1 is a block diagram of illustratively showing a general OFDM receiver;

Fig. 2 is a block diagram of showing a preferable embodiment of the channel equalizer of the OFDM receiver according to the present invention;

Fig. 3 is a block diagram of showing in detail the channel state determination unit of Fig. 2;

Fig. 4 is a block diagram of showing the closed loop equalizer of Fig. 2 in detail;

Fig. 5 is a block diagram of showing the open loop equalizer of Fig. 2 in detail;

Fig. 6 is a flow chart of showing a method of equalizing channels by using the channel equalizer of the OFDM receiver according to the present invention;

Fig. 7 is a flow chart of showing the channel state determination step of Fig. 6 in more detail; and

Fig. 8 is a flow chart of showing the output step of Fig.6 in detail.

Hereinafter, the present invention is described in detail with respect to the drawing.

Fig. 2 is a block diagram of showing a preferable embodiment of the channel equalizer of the OFDM receiver according to the present invention.

In the drawing, the same reference numerals are used to designate the same components.

The channel equalizer 100 comprises a closed loop equalizer 120, an open loop equalizer 140, a channel state determination unit 160 and a switching unit 180.

As shown in the drawing, the channel equalizer 100 of the present embodiment includes the closed loop equalizer 120 and the open loop equalizer 140.

The closed loop equalizer unit 120 equalizes the OFDM signal which has been Fast-Fourier-transformed by the FFT unit 30 by using a value calculated through an interpolation of the OFDM signal that is already equalized.

The open loop equalizer 140 equalizes the OFDM signal outputted from the FFT unit 30 through an interpolated value for a pilot contained in the OFDM signal.

The channel state determination unit 160 determines channel states of the OFDM signals inputted to the closed loop equalizer 120 and the open loop equalizer 140.

Here, the channel state determination unit 160 provides the switching unit 180 with the determined channel state information.

The switching unit 180 outputs selectively the OFDM signals which are respectively equalized by the closed loop equalizer 120 and the open loop equalizer 140.

That is, the switching unit 180 selectively outputs one of the OFDM signals respectively outputted by the closed loop equalizer 120 and the open loop equalizer 140, on the basis of the channel state information from the channel state determination unit 160.

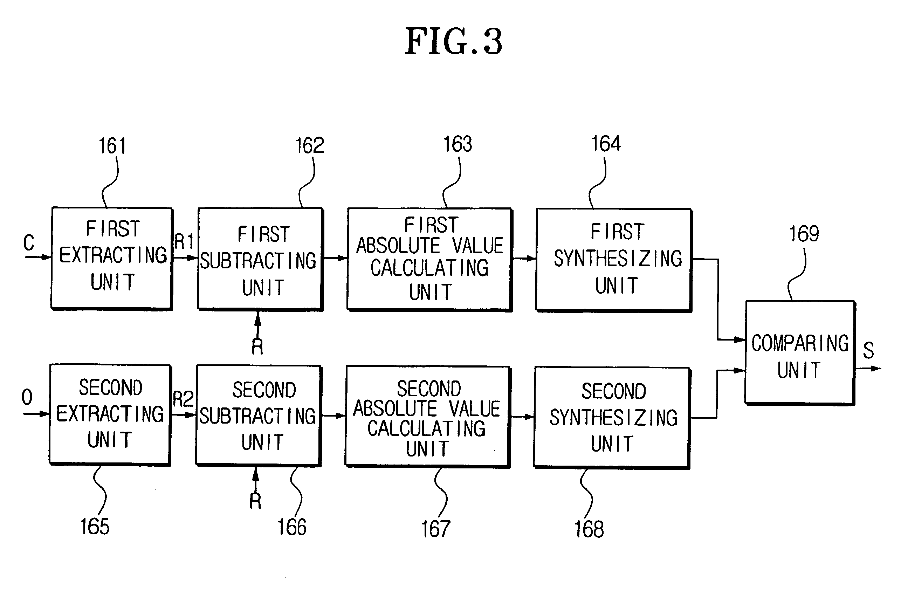

Fig. 3 is a block diagram of showing in detail the channel state determination unit 160 of Fig. 2.

The channel state determination unit 160 comprises a first extracting unit 161, a first subtracting unit 162, a first absolute value calculating unit 163, a first synthesizing unit 164, a second extracting unit 165, a second subtracting unit 166, a second absolute value calculating unit 167, a second synthesizing unit 168, and a comparing unit 169.

The first extracting unit 161 extracts the first reference signal R1 from the OFDM signal outputted from the closed loop equalizer 120.

The first subtracting unit 162 performs a subtraction with the first reference signal R1 extracted from the first extracting unit 161 and a preset reference signal R.

The first absolute value calculating unit 163 calculates an absolute value of the value calculated through the subtraction by the first subtracting unit 163.

The first synthesizing unit 164 produces a sum of the absolute values outputted from the first absolute value calculating unit 163 for a preset time.

The second extracting unit 165 extracts the second reference signal R2 from the OFDM signal outputted from the open loop equalizer 140.

The second subtracting unit 166 performs a subtraction with the second reference signal R2 extracted from the second extracting unit 165 and the preset reference signal R.

The second absolute value calculating unit 167 calculates an absolute value of the value calculated through the subtraction by the second subtracting unit 166.

The second synthesizing unit 168 produces a sum of the absolute values outputted from the second absolute value calculating unit 168 for a preset time

The comparing unit 169 compares magnitudes of the sums of the absolute values respectively outputted from the first synthesizing unit 164 and the second synthesizing unit 168.

Here, the comparing unit 169 transmits the comparison result to the switching unit 180.

Then, the switching unit 180 selectively outputs, to the FEC unit 60, the OFDM signal corresponding to the sum of the absolute value which has been determined as a smaller one according to the comparison result of the comparing unit 169, among the OFDM signals outputted from the closed loop equalizer 120 and the open loop equalizer 140.

Accordingly, the OFDM signal, which corresponds to a smaller one of differences between the reference signal R and the first reference signal R1/the second reference signal R2 contained in each OFDM signal, is outputted among the OFDM signals that are outputted from the closed loop equalizer 120 and the open loop equalizer 140 that equalize respectively the OFDM signals outputted from the FFT unit 30. Thereby, the OFDM signal can be obtained which has been more exactly equalized among the signals from the closed loop equalizer 120 and the open loop equalizer 140.

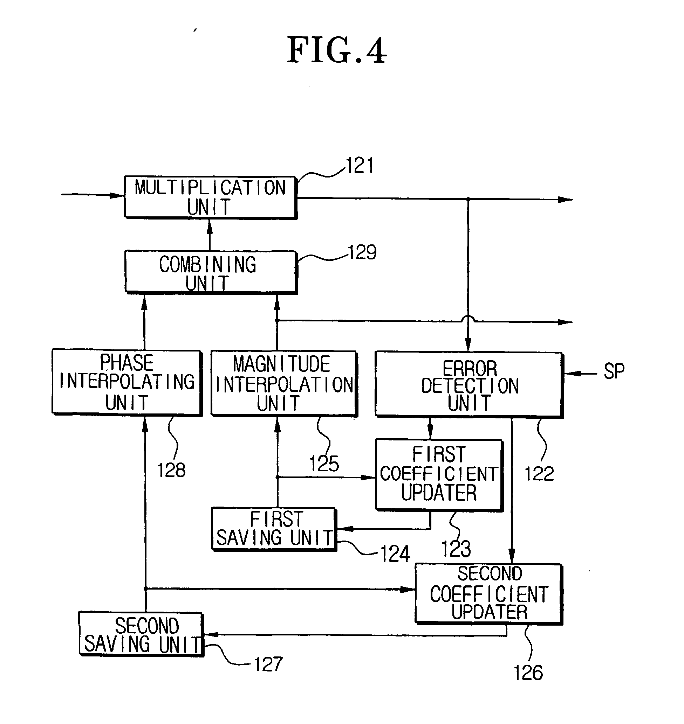

Fig. 4 is a block diagram of showing the closed loop equalizer 120 of Fig. 2 in detail.

The closed loop equalizer 120 comprises an error detection unit 122, a phase interpolating unit 128, a magnitude interpolation unit 125, a combining unit 129, and a multiplication unit 121.

The error detection unit 122 detects a coefficient that is a difference between a standard pilot SP and a pilot contained in the OFDM signal outputted from the FFT unit 30, on the basis of the standard pilot SP.

The phase interpolation unit 128 interpolates a phase of the pilot of the OFDM signal on the basis of a complex number of the coefficient detected by the error detection unit 122.

The magnitude interpolation unit 125 interpolates a magnitude of the pilot of the OFDM signal on the basis of an integral number of the coefficient detected by the error detection unit 122.

The combining unit 129 combines the phase and the magnitude of the pilot interpolated by the phase interpolation unit 128 and the magnitude interpolation unit 125.

The multiplication unit 121 compensated the OFDM signal by performing a multiplication of the pilot, which is combined by the combining unit 129, with the OFDM signal outputted from the FFT unit 30

Accordingly, assuming that an $(i+1)_{th}$ received signal is Ri+1, and an $i_{th}$ channel compensation coefficient is $H_i$, a compensation signal $Z_{i+1}$ for the $(i+1)_{th}$ received signal outputted by the multiplication unit 121 is shown as a following equation1.

$$Z_{i+1} = \frac{R_{i+1}}{H_i}.$$

The error detection unit 122 calculates an error

of the $i_{th}$ channel compensation coefficient $H_i$ by comparing the standard pilot SP and the compensation signal $Z_{i+1}$ for the $(i+1)_{th}$ received signal.

Assuming channel compensation coefficients for a magnitude and a phase of the $i_{th}$ signal are respectively $\rho_i$ and $\theta_i$, channel compensation coefficients $\rho_{i+1}$ and $\theta_{i+1}$ of the $(i+1)_{th}$ signal, which is interpolated by the phase interpolation unit 128 and the magnitude interpolation unit 125, are shown as shown in a following equation2.

$$\rho_{i+1} = \rho_i + \mu_{mag}(R-|z_i|)$$

$$\theta_{i+1} = \theta_i - \mu_{phase} \cdot Im\{z_i\} \cdot sign(SCpilot)$$

Here, R is a magnitude of the standard pilot SP. $\mu$ mag and $\mu$ phase are interpolation step sizes which are convergent times for compensation of the $\rho_{i+1}$ and $\theta_{i+1}$.

'R-|Zi|' and 'Im{Zi} · sign(SCpilot)' are error components of the signal contained in Zi.

Accordingly, in the closed loop equalizer 120, the convergent time is long at the dynamic channel, and however the closed loop equalizer can eliminate an effect of the error components of the signal having a uniform value at the static channel, thus easily equalizing the OFDM signal transmitted through the static channel.

Preferably, the closed loop equalizer 120 further includes a first coefficient updater 123, a first saving unit 124, a second coefficient updater 126, and a second saving unit 127.

The first coefficient updater 123 updates integrals newly inputted among the coefficients detected by the error detection unit 122.

The first saving unit 124 saves the updated integrals by the first coefficient updater 123.

The second coefficient updater 126 updates complex numbers newly inputted among the coefficients detected by the error detection unit 122.

The second saving unit 127 saves the updated complex numbers by the second coefficient updater 126.

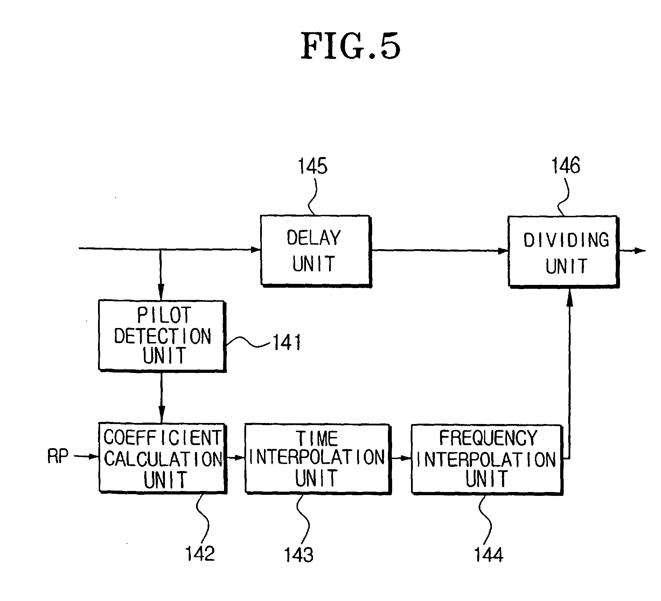

Fig. 5 is a block diagram of showing the open loop equalizer 140 of Fig. 2 in detail.

The open loop equalizer 140 comprises a pilot detection unit 141, a coefficient calculation unit 142, a time interpolation unit 143, a frequency interpolation unit 144, a delay unit 145, and a dividing unit 146.

The pilot detection unit 141 detects a pilot from the OFDM signal outputted from the FFT 30.

The coefficient calculation unit 142 calculates a coefficient for an interpolating of the pilot of the OFDM signal detected by the pilot detection unit 141 by using a preset reference pilot RP.

The time interpolation unit 143 performs an interpolation along a time axis of the pilot detected by the pilot detection unit 141 on a basis of the coefficient calculated by the coefficient calculation unit 142.

A frequency interpolation unit 144 performs an interpolation along a frequency axis of the pilot detected by the pilot detection unit 141 on a basis of the coefficient calculated by the coefficient calculation unit 142.

The delay unit 145 saves the OFDM signal outputted by the FFT unit 30 until the interpolated pilot is outputted from the frequency interpolation unit 144, and then outputs the OFDM signal.

The dividing unit 146 equalizes channels by dividing the OFDM signal outputted from the delay unit 145 by an estimated value of channel outputted from the frequency interpolation unit 144.

Generally, the OFDM signal (R(x)) received to the OFDM receiver can be shown as in a following Equation3.

$$R(k) = H(k)X(k) + n(k)$$

Here, H(k)is a characteristic of the channel, X(k) is the OFDM signal transmitted, and n(k) is the Gaussian Noise of the channel.

That is, it is understood that a distortion and the Gaussian noise n(k) according to the characteristic of the channel H(k) are contained in the OFDM signal R(x) received.

Then, the characteristic of the channel calculated by the frequency interpolation unit 144 can be shown as in a following Equation 4.

$$H(k) = \frac{R(k)}{C(k)} - \frac{n(k)}{C(k)}$$

Here, C(k)is a pilot contained in the transmission signal X(k).

The characteristic of the channel H(k) contains an error component "-n(k)/C(k)".

The division unit 146 performs a channel equalization as shown in a following Equation 5 by using the estimated value of the channel H'(k), which is outputted from the frequency interpolation unit 144 with the error component -n(k)/C(k) considered.

$$X(k) = \frac{R(k)}{H'(k)}$$

Accordingly, in case the channel state is on dynamic state, more exact equalization can be performed.

Meanwhile, the method of equalizing the OFDM signal with an excellent performance is not limited to the above embodiment. The above embodiment can be applied to a method that comprises a step of outputting to the FEC unit 60 the OFDM signal respectively equalized through the closed loop equalizer 120 and the open loop equalizer 140 and a step of outputting the smaller one of bit error rates BER outputted from the FEC unit 60.

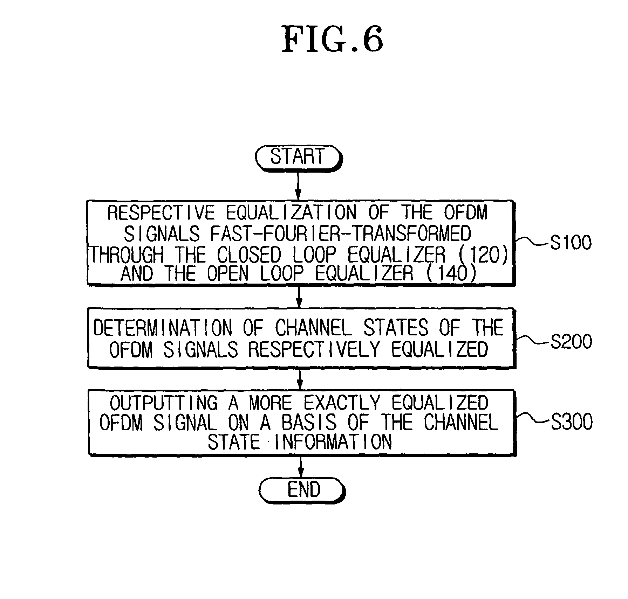

Fig. 6 is a flow chart of showing a method of equalizing channels by using the channel equalizer of the OFDM receiver according to the present invention.

First, the closed loop equalizer 120 and the open loop equalizer 140 respectively equalize the OFDM signal fast-Fourier-transformed according to a respective predetermined method (S100).

The channel state determination unit 160 determines channel states of the OFDM signals respectively equalized by the closed loop equalizer 120 and the open loop equalizer 140, and provides the switching unit 180 with the determined information (S200).

Then, the switching unit 180 outputs to the FEC unit 60 a more exactly equalized OFDM signal of the OFDM signals respectively outputted by the closed loop equalizer 120 and the open loop equalizer 140 on a basis of the channel state information from the channel state determination unit 160 (S300).

Accordingly, more exact equalization can be performed regardless of the states of the channels, by respectively equalizing the OFDM signal by the closed loop equalizer 120 and the open loop equalizer 140 and by outputting to the FEC unit 60 a more exactly equalized OFDM signal according to the channel state.

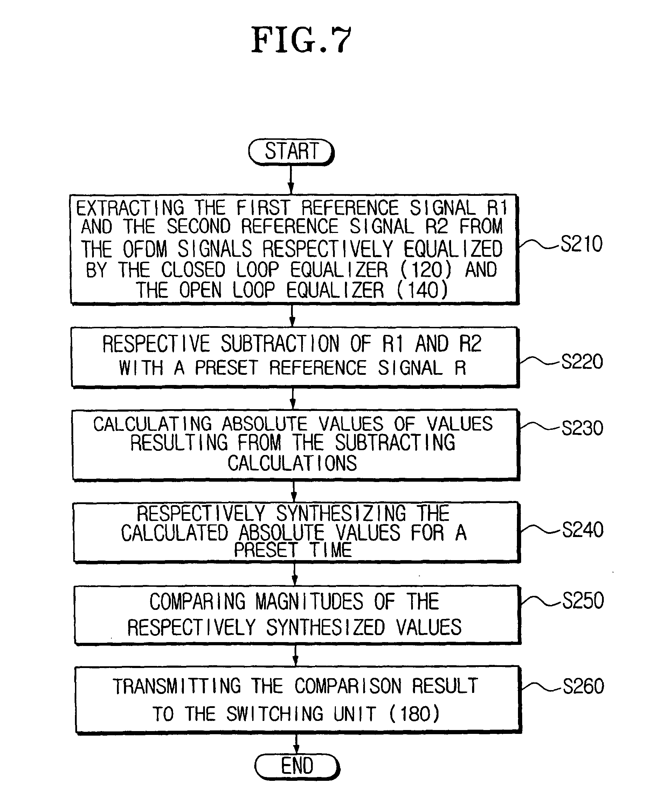

Fig. 7 is a flow chart of showing the step S200 of Fig. 6 in more detail.

First, a first extracting unit 161 and a second extracting unit 165 extract the first reference signal R1 and the second reference signal R2 from the OFDM signals respectively equalized by the closed loop equalizer 120 and the open loop equalizer 140 (S210).

The first subtracting unit 162 and the second subtracting unit 166 perform subtractions of the first reference signal R1 and the second reference signal R2 with a respective preset reference signal R (S220).

The first absolute value calculating unit 163 and the second absolute value calculating unit 167 calculate absolute values of values resulting from the subtracting calculations of the first subtracting unit 162 and the second subtracting unit 166 (S230)

The first synthesizing unit 164 and a second synthesizing unit 168 respectively synthesize, for a preset time, the absolute values calculated by the first absolute value calculating unit 163 and the second absolute value calculating unit 167 (5240).

The comparing unit 169 compares magnitudes of the absolute values respectively synthesized by the first synthesizing unit 164 and the second synthesizing unit 168 (S250).

Thus, the comparing unit 169 transmits the comparison result to the switching unit 180 (S260).

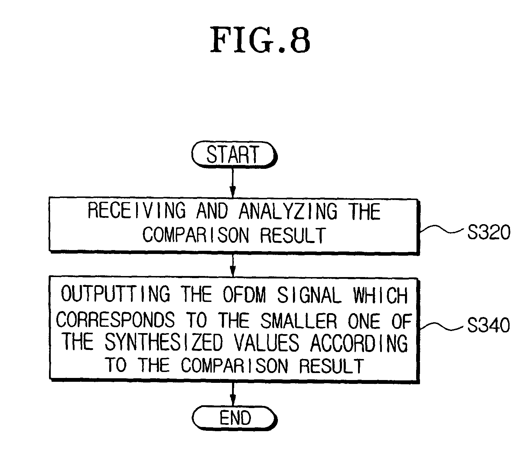

Fig. 8 is a flow chart of showing the step S300 of Fig.6 in detail.

The switching unit 180 receives the comparison result transmitted by the comparing unit 169, and analyses the comparison result (S320).

Then, the switching unit 180 outputs the OFDM signal which corresponds to the smaller one of the values compared by the first synthesizing unit 164 and the second synthesizing unit 168, between the OFDM signals outputted by the closed loop equalizer 120 and the open loop equalizer 140 (S340).

Accordingly, a more exact equalization can be performed according to a channel state by comparing a preset reference signal R and reference signals R1, R2 respectively contained in the OFDM signals equalized by the closed loop equalizer and the open loop equalizer, and by determining the channel state according to errors between the reference signals to output the OFDM signal having the reference signal of the smaller error by the switching unit.

Meanwhile, in the present embodiment, the channel state is determined from the output signals of the closed loop equalizer and the open loop equalizer, and one of outputs of the closed loop equalizer and the open loop equalizer is outputted to the FEC unit 60 through the switching unit 180 according to the determination result.

However, the present invention can be applied to a case where the transmission channel state of the OFDM signal is determined by using information of a sampling timing offset that occurs at a sampling during a restoration process of the OFDM signal from output signals of the FFT unit 30, and the OFDM signal is selectively outputted to the closed loop equalizer and the open loop equalizer according to the determination result.

Then, for a switching operation, the OFDM signal is outputted to the closed loop equalizer 120 when the channel state is determined as a static one, while the OFDM signal is outputted to the open loop equalizer 140 when the channel state is determined as a dynamic one.

As mentioned above, in the present invention, a more exact equalization can be performed according to a channel state by obtaining a respective difference between a preset reference signal and a first reference signal and a second reference signal respectively contained in the OFDM signals outputted by the closed loop equalizer and the open loop equalizer, which respectively equalizes the Fast-Fourier- transformed OFDM signals, and by outputting the OFDM signal corresponding to the smaller difference.

**Claims**

1. A channel equalizer (100) of an OFDM receiver, comprising:

    a closed loop equalizer (120) for compensating a distortion of an OFDM signal, the distortion being generated by transmitting the OFDM signal through a transmission channel and the OFDM signal containing a pilot signal, by using a closed-loop channel compensation coefficient calculated by comparing the pilot signal contained in the closed loop equalized OFDM signal to a first reference pilot signal;
an open loop equalizer (140) for compensating the distortion by using an open-loop channel compensation coefficient calculated by comparing the pilot signal contained in the OFDM signal to a second reference pilot signal;
a channel state determination unit (160) for determining a channel state of the OFDM signal according to a first difference between a preset reference signal and a first reference signal contained in the OFDM signal equalized by the closed loop equalizer and a second difference between the preset reference signal and a second reference signal contained in the OFDM signal equalized by the open loop equalizer; and
a switching unit (180) for selectively outputting one of the OFDM signals respectively equalized by the closed loop equalizer and the open loop equalizer, according to a determination result of the channel state.

2. The channel equalizer according to claim 1, wherein the channel state determination unit comprises:

an extracting unit (161) for extracting the first reference signal from the OFDM signal equalized by the closed loop equalizer and the second reference signal from the OFDM signal equalized by the open loop equalizer;
a first subtracting unit (162) for performing a subtraction of the first reference signal with the preset reference signal and a second subtracting unit (166) for performing a subtraction of the second reference signal with the preset reference signal;
a first absolute value calculating unit (163) and a second absolute value calculating unit (167) for respectively calculating absolute values of values resulting from the subtracting calculations of the first subtracting unit and the second subtracting unit;
a first synthesizing unit (164) and a second synthesizing unit (168) for respectively producing, for a preset time, a sum of the absolute values calculated by the first absolute value calculating unit and the second absolute value calculating unit; and
a comparing unit (169) for comparing magnitudes of the sums of the absolute values respectively produced by the first synthesizing unit and the second synthesizing unit.

3. The channel equalizer according to claim 2, wherein the switching unit outputs the OFDM signal corresponding to a smaller one of the sums of the absolute values according to the comparison result of the comparing unit.

4. The channel equalizer according to claim 3, wherein the switching unit outputs the OFDM signal equalized by the closed loop equalizer in case the transmission channel of the OFDM signal is on static state, and outputs the OFDM signal equalized by the open loop equalizer in case the transmission channel of the OFDM signal is on dynamic state.

5. A channel equalizing method of using a channel equalizer of an OFDM receiver that compensates a distortion of an OFDM signal, the distortion being generated by transmitting the OFDM signal through a transmission channel and the OFDM signal containing a pilot signal, the method comprising the steps of:

compensating, by closed loop equalizing, the distortion by using a closed loop channel compensation coefficient calculated by comparing the pilot signal contained in the closed loop equalized OFDM signal to a first reference pilot signal;
compensating, by open loop equalizing, the distortion by using an open-loop channel compensation coefficient calculated by comparing the pilot signal contained in the OFDM signal to a second reference pilot signal;
determining a channel state of the OFDM signal according to a first difference between a preset reference signal and a first reference signal contained in the OFDM signal equalized by closed loop equalizing and a second difference between the preset reference signal and a second reference signal contained in the OFDM signal equalized by open loop equalizing;
selectively outputting one of the OFDM signals respectively equalized by closed loop equalizing and open loop equalizing, according to a determination result of the channel state.

6. The channel equalizing method according to claim 5, wherein the determining step comprising:

extracting the first reference signal from the OFDM signal equalized by dosed loop equalizing and the second reference signal from the OFDM signal equalized by the open loop equalizing;
performing subtractions of the first reference signal with the preset reference signal and the second reference signal with the preset reference signal;
respectively calculating absolute values of values resulting from the subtracting calculations;

producing, for a preset time, the sums of the respective absolute values calculated; and comparing magnitudes of the sums of the absolute values respectively synthesized.

7. The channel equalizing method according to claim 6, wherein the outputting step outputs the OFDM signal corresponding to the smaller one of the sums of the absolute values according to the comparison result of the step of comparing.

**Patentansprüche**

1. Kanalentzerrer (100) eines OFDM-Empfängers, der umfasst:

einen rückgekoppelten Entzerrer (120), der eine Verzerrung eines OFDM-Signals kompensiert, wobei die Verzerrung erzeugt wird, indem das OFDM-Signal über einen Sendekanal gesendet wird, und das OFDM-Signal ein Pilotsignal enthält, und zwar unter Verwendung eines Rückkopplungs-Kanalkompensationskoeffizienten, der berechnet wird, indem das in dem rückgekoppelter Entzerrung unterzogenen OFDM-Signal enthaltene Pilotsignal mit einem ersten Bezugs-Pilotsignal verglichen wird;

einen rückkopplungslosen Entzerrer (140), der die Verzerrung unter Verwendung eines rückkopplungslosen Kanalkompensationskoeffizienten kompensiert, der berechnet wird, indem das in dem OFDM-Signal enthaltene Pilotsignal mit einem zweiten Bezugs-Pilotsignal verglichen wird;

eine Kanalzustands-Bestimmungseinheit (160), die einen Kanalzustand des OFDM-Signals entsprechend einer ersten Differenz zwischen einem voreingestellten Bezugssignal und einem ersten Bezugssignal, das in dem durch den rückgekoppelten Entzerrer entzerrten OFDM-Signal enthalten ist, und einer zweiten Differenz zwischen dem voreingestellten Bezugssignal und einem zweiten Bezugssignal bestimmt, das in dem durch den rückkopplungslosen Entzerrer entzerrten OFDM-Signal enthalten ist; und

eine Umschalteinheit (180), die entsprechend einem Bestimmungsergebnis des Kanalzustandes selektiv eines der OFDM-Signale ausgibt, die mit dem rückgekoppelten Entzerrer bzw. dem rückkopplungslosen Entzerrer entzerrt wurden.

2. Kanalentzerrer nach Anspruch 1, wobei die Kanalzustands-Bestimmungseinheit umfasst:

eine Extrahiereinheit (161), die das erste Bezugssignal aus dem durch den rückgekoppelten Entzerrer entzerrten OFDM-Signal und das zweite Bezugssignal aus dem durch den rückkopplungslosen Entzerrer entzerrten OFDM-Signal extrahiert;

eine erste Subtrahiereinheit (162), die eine Subtraktion zwischen dem ersten Bezugssignal und dem voreingestellten Bezugssignal durchführt, und eine zweite Subtrahiereinheit (166), die eine Subtraktion zwischen dem zweiten Bezugssignal und dem voreingestellten Bezugssignal durchführt;

eine erste Absolutwert-Berechnungseinheit (163) und eine zweite Absolutwert-Berechnungseinheit (167), die Absolutwerte von Werten berechnen, die sich aus den Subtraktionsberechnungen der ersten Subtrahiereinheit bzw. der zweiten Subtrahiereinheit ergeben;

eine erste Synthetisierungseinheit (164) und eine zweite Synthetisierungseinheit (168), die für eine voreingestellte Zeit eine Summe der Absolutwerte erzeugen, die mit der ersten Absolutwert-Berechnungseinheit bzw. der zweiten Absolutwert-Berechnungseinheit berechnet wurden; und

eine Vergleichseinheit (169), die Beträge der Summen der Absolutwerte vergleicht, die durch die erste Synthetisierungseinheit bzw. die zweite Synthetisierungseinheit erzeugt wurden.

3. Kanalentzerrer nach Anspruch 2, wobei die Umschalteinheit entsprechend dem Vergleichsergebnis der Vergleichseinheit das OFDM-Signal ausgibt, das einer kleineren der Summen der Absolutwerte entspricht.

4. Kanalentzerrer nach Anspruch 3, wobei die Umschalteinheit das durch den rückgekoppelten Entzerrer entzerrte OFDM-Signal ausgibt, wenn sich der Sendekanal des OFDM-Signals in statischem Zustand befindet, und das durch den rückkopplungslosen Entzerrer entzerrte OFDM-Signal ausgibt, wenn sich der Sendekanal des OFDM-Signals in dynamischem Zustand befindet.

5. Kanalentzerrungsverfahren unter Einsatz eines Kanalentzerrers eines OFDM-Empfängers, der eine Verzerrung eines OFDM-Signals kompensiert, wobei die Verzerrung erzeugt wird, indem das OFDM-Signal über einen Sendekanal gesendet wird, und das OFDM-Signal ein Pilotsignal enthält, wobei das Verfahren die folgenden Schritte umfasst:

Kompensieren der Verzerrung durch rückgekoppelte Entzerrung unter Verwendung eines Rückkopplungs-Kanalkompensationskoeffizienten, der berechnet wird, indem das in dem rückgekoppelter Entzerrung unterzogenen OFDM-Signal enthaltene Pilotsignal mit einem ersten Bezugs-Pilotsignal verglichen wird;

Kompensieren der Verzerrung durch rückkopplungslose Entzerrung unter Verwendung eines rückkopplungslosen Kanalkompensationskoeffzienten, der berechnet wird, indem das in dem OFDM-Signal enthaltene Pilotsignal mit einem zweiten Bezugs-Pilotsignal verglichen wird;

Bestimmen eines Kanalzustandes des OFDM-Signals entsprechend einer ersten Differenz zwischen einem voreingestellten Bezugssignal und einem ersten Bezugssignal, das in dem durch rückgekoppelte Entzerrung entzerrten OFDM-Signal enthalten ist, und einer zweiten Differenz zwischen dem voreingestellten Bezugssignal und einem zweiten Bezugssignal, das in dem durch rückkopplungslose Entzerrung entzerrten OFDM-Signal enthalten ist;

selektives Ausgeben der durch rückgekoppelte Entzerrung bzw. rückkopplungslose Entzerrung entzerrten OFDM-Signale entsprechend einem Bestimmungsergebnis des Kanalzustandes.

**6.** Kanalentzerrungsverfahren nach Anspruch 5, wobei der Bestimmungsschritt umfasst:

Extrahieren eines ersten Bezugssignals aus dem durch rückgekoppelte Entzerrung entzerrten OFDM-Signal und des zweiten Bezugssignals aus dem durch das rückkopplungslose Entzerren entzerrten OFDM-Signal;

Durchführen von Subtraktionen zwischen dem ersten Bezugssignal und dem voreingestellten Bezugssignal und zwischen dem zweiten Bezugssignal und dem voreingestellten Bezugssignal;

Berechnen von Absolutwerten von Werten, die sich jeweils aus den Subtraktionsberechnungen ergeben;

Erzeugen der Summen der jeweiligen berechneten Absolutwerte für eine voreingestellte Zeit; und

Vergleichen von Beträgen der Summen der jeweils synthetisierten Absolutwerte.

**7.** Kanalentzerrungsverfahren nach Anspruch 6, wobei der Ausgabeschritt entsprechend dem Vergleichsergebnis des Vergleichsschritts das OFDM-Signal ausgibt, das der kleineren der Summen der Absolutwerte entspricht.

## Revendications

**1.** Egaliseur de canal (100) d'un récepteur MROF, comprenant :

un égaliseur à boucle fermée (120) pour compenser une distorsion d'un signal MROF, la distorsion étant produite par la transmission du signal MROF à travers un canal de transmission et le signal MROF contenant un signal pilote, en utilisant un coefficient de compensation de canal en boucle fermée calculé en comparant le signal pilote contenu dans le signal MROF égalisé en boucle fermée à un premier signal pilote de référence ;
un égaliseur à boucle ouverte (140) pour compenser la distorsion en utilisant un coefficient de compensation de canal en boucle ouverte calculé en comparant le signal pilote contenu dans le signal MROF et un deuxième signal pilote de référence ;
une unité de détermination d'état de canal (160) pour déterminer un état de canal du signal MROF selon une première différence entre un signal de référence préréglé et un premier signal de référence contenu dans le signal MROF égalisé par l'égaliseur à boucle fermée et une deuxième différence entre le signal de référence préréglé et un deuxième signal de référence contenu dans le signal MROF égalisé par l'égaliseur à boucle fermée ; et
une unité de commutation (180) pour délivrer sélectivement un des signaux MROF respectivement égalisés par l'égaliseur à boucle fermée et l'égaliseur à boucle ouverte selon un résultat de détermination de l'état de canal.

**2.** Egaliseur de canal selon la revendication 1, dans lequel l'unité de détermination d'état de canal comprend :

une unité d'extraction (161) pour extraire le premier signal de référence du signal MROF égalisé par l'égaliseur en boucle fermée et le deuxième signal de référence du signal MROF égalisé par l'égaliseur à boucle ouverte ;
une première unité de soustraction (162) pour effectuer une soustraction entre le premier signal de référence et le signal de référence préréglé et une deuxième unité de soustraction (166) pour effectuer une soustraction entre le deuxième signal de référence et le signal de référence préréglé ;

une première unité de calcul de valeurs absolues (163) et une deuxième unité de calcul de valeurs absolues (167) pour calculer respectivement les valeurs absolues de valeurs résultant des calculs de soustraction de la première unité de soustraction et de la deuxième unité de soustraction ;

une première unité de synthèse (164) et une deuxième unité de synthèse (168) pour produire respectivement, pendant un temps préréglé, une somme des valeurs absolues calculées par la première unité de calcul de valeurs absolues et la deuxième unité de calcul de valeurs absolues ; et

une unité de comparaison (169) pour comparer les grandeurs des sommes des valeurs absolues respectivement produite par la première unité de synthèse et la deuxième unité de synthèse.

3. Egaliseur de canal selon la revendication 2, dans lequel l'unité de commutation délivre le signal MROF correspondant à la plus petite des sommes des valeurs absolues selon le résultat de comparaison de l'unité de comparaison.

4. Egaliseur de canal selon la revendication 3, dans lequel l'unité de commutation délivre le signal MROF égalisé par l'égaliseur à boucle fermé dans le cas où le canal de transmission du signal MROF est en état statique, et délivre le signal égalisé par l'égaliseur à boucle ouverte dans le cas où le canal de transmission du signal MROF est en état dynamique.

5. Procédé d'égalisation de canal utilisant un égaliseur de canal d'un récepteur MROF qui compense une distorsion d'un signal MROF, la distorsion étant produite par la transmission du signal MROF à travers un canal de transmission et le signal MROF contenant un signal pilote, le procédé comprenant les étapes consistant à :

compenser, par une égalisation en boucle fermée, la distorsion en utilisant un coefficient de compensation de canal en boucle fermée calculée en comparant le signal pilote contenu dans le signal MROF égalisé en boucle fermée à un premier signal pilote de référence ;

compenser, par une égalisation en boucle ouverte, la distorsion en utilisant un coefficient de compensation de canal en boucle ouverte calculée en comparant le signal pilote contenu dans le signal MROF égalisé en boucle fermée à un deuxième signal pilote de référence ;

déterminer un état de canal du signal MROF selon une première différence entre un signal de référence préréglé et un premier signal de référence contenu dans le signal MROF égalisé par une égalisation en boucle fermée et une deuxième différence entre le signal de référence préréglé et un deuxième signal de référence contenu dans le signal MROF égalisé par une égalisation en boucle ouverte ;

délivrer sélectivement un des signaux MROF respectivement égalisés par une

égalisation en boucle fermée et une égalisation en boucle ouverte, selon un résultat de détermination de l'état de canal.

6. Procédé d'égalisation de canal selon la revendication 5, dans lequel l'étape de détermination comprend :

l'extraction du premier signal de référence du signal MROF égalisé par égalisation en boucle fermée et du deuxième signal de référence du signal MROF égalisé par égalisation en boucle ouverte ;

la réalisation de soustractions entre le premier signal de référence et le signal de référence préréglé et entre le deuxième signal de référence et le signal de référence préréglé ;

le calcul respectivement de valeurs absolues de valeurs résultant des calculs de soustraction ;

la production, pendant un temps préréglé, des sommes des valeurs absolues calculées respectives ; et

la comparaison des grandeurs des sommes des valeurs absolues respectivement synthétisées.

7. Procédé d'égalisation de canal selon la revendication 6, dans lequel l'étape de délivrance délivre le signal MROF correspondant à la plus petite des sommes des valeurs absolues selon le résultat de comparaison de l'étape de comparaison.

EP 1 367 788 B1

# FIG.1

# FIG.2

11

# FIG.3

EP 1 367 788 B1

# FIG.4

# FIG.5

# FIG.6

```
            ( START )
                |
                v
+----------------------------------------+
| RESPECTIVE EQUALIZATION OF THE OFDM    |
|   SIGNALS FAST-FOURIER-TRANSFORMED     |  ~ S100
| THROUGH THE CLOSED LOOP EQUALIZER (120)|
|    AND THE OPEN LOOP EQUALIZER (140)   |
+----------------------------------------+
                |
                v
+----------------------------------------+
| DETERMINATION OF CHANNEL STATES OF THE |  ~ S200
|   OFDM SIGNALS RESPECTIVELY EQUALIZED  |
+----------------------------------------+
                |
                v
+----------------------------------------+
|  OUTPUTTING A MORE EXACTLY EQUALIZED   |
|  OFDM SIGNAL ON A BASIS OF THE CHANNEL |  ~ S300
|         STATE INFORMATION              |
+----------------------------------------+
                |
                v
             ( END )
```

# FIG.7

START

EXTRACTING THE FIRST REFERENCE SIGNAL R1 AND THE SECOND REFERENCE SIGNAL R2 FROM THE OFDM SIGNALS RESPECTIVELY EQUALIZED BY THE CLOSED LOOP EQUALIZER (120) AND THE OPEN LOOP EQUALIZER (140) — S210

RESPECTIVE SUBTRACTION OF R1 AND R2 WITH A PRESET REFERENCE SIGNAL R — S220

CALCULATING ABSOLUTE VALUES OF VALUES RESULTING FROM THE SUBTRACTING CALCULATIONS — S230

RESPECTIVELY SYNTHESIZING THE CALCULATED ABSOLUTE VALUES FOR A PRESET TIME — S240

COMPARING MAGNITUDES OF THE RESPECTIVELY SYNTHESIZED VALUES — S250

TRANSMITTING THE COMPARISON RESULT TO THE SWITCHING UNIT (180) — S260

END

# FIG.8

```
      ( START )
          │
          ▼
┌─────────────────────────┐
│ RECEIVING AND ANALYZING THE │ ── S320
│    COMPARISON RESULT        │
└─────────────────────────┘
          │
          ▼
┌─────────────────────────────┐
│ OUTPUTTING THE OFDM SIGNAL WHICH │
│ CORRESPONDS TO THE SMALLER ONE OF │ ── S340
│ THE SYNTHESIZED VALUES ACCORDING  │
│    TO THE COMPARISON RESULT       │
└─────────────────────────────┘
          │
          ▼
      ( END )
```